**Europäisches Patentamt**

**European Patent Office**

**Office européen des brevets**

(19)

(11) Veröffentlichungsnummer : **0 129 180**
**B1**

(12)

# EUROPÄISCHE PATENTSCHRIFT

(45) Veröffentlichungstag der Patentschrift :
01.10.86

(51) Int. Cl.⁴ : **B 65 G   1/127**, B 65 G 47/06

(21) Anmeldenummer : **84106641.8**

(22) Anmeldetag : **09.06.84**

(54) Vorrichtung für die Zufuhr von Materialstangen in eine Nachschubeinrichtung für Werkzeugmaschinen, insbesondere Drehautomaten.

(30) Priorität : **11.06.83 DE 3321164**

(43) Veröffentlichungstag der Anmeldung :
**27.12.84 Patentblatt 84/52**

(45) Bekanntmachung des Hinweises auf die Patenterteilung : **01.10.86 Patentblatt 86/40**

(84) Benannte Vertragsstaaten :
**CH DE FR GB IT LI**

(56) Entgegenhaltungen :
**DE-A- 2 407 756**
**DE-C- 2 350 105**
**US-A- 3 750 804**
**US-A- 4 016 987**

(73) Patentinhaber : **Fechenbach-Collenberger Maschinenbau GmbH**
**Brandenburger Strasse 7**
**D-6985 Stadtprozelten (DE)**

(72) Erfinder : **Werkmeister, Johannes**
**Bahnhofstrasse 2**
**D-6981 Collenberg (DE)**

(74) Vertreter : **Zinngrebe, Horst, Dr.rer.nat.**
**Saalbaustrasse 11**
**D-6100 Darmstadt (DE)**

**EP 0 129 180 B1**

Jouve, 18, rue St-Denis, 75001 Paris, France

## Beschreibung

Die Erfindung betrifft eine Vorrichtung für die Zufuhr von Materialstangen in eine Nachschubeinrichtung für Werkzeugmaschinen, insbesondere Drehautomaten, mit einem mehrere, übereinander schräg angeordnete Ebenen aufweisenden Stangenmagazin sowie mit einem vor den Ebenen angeordneten Aufzug, welcher Mitnehmer zum Erfassen jeweils einer Stange aus dem Magazin sowie am oberen Ende eine Stangenabwurfeinrichtung aufweist, die eine Stange aus den Mitnehmern der Nachschubeinrichtung zuführt.

Aus der deutschen Patentschrift 23 50 105 ist eine Vorrichtung bekannt, die zur Lagerung von Materialstangen mehrere übereinander liegende Ebenen aufweist, aus denen die Stangen einzeln mit einem Aufzug einer Nachschubeinrichtung zugeführt werden. Die schräg gestellten Ebenen weisen jeweils eine aus dem Weg der Mitnehmer am Aufzug wegschwenkbare Zunge auf, sodaß die Mitnehmer jeweils eine Stange aus einer Ebene entnehmen können.

Bei dieser Vorrichtung können aus dem Magazin Stangen nur in der Weise entnommen werden, daß zuerst die obere Ebene und dann die nach unten nachfolgenden Ebenen von Materialstangen entleert werden. Ferner ist nachteilig, daß der Mitnehmer von der vordersten bevorrateten Stange verschwenkt werden muß, um dadurch einen den Aufzugantrieb steuernden Schalter zu betätigen. Ist die Stange sehr dünn und sind in der betreffenden Ebene nur noch wenige Stangen bevorratet, besteht die Gefahr, daß die Mitnehmer, von denen über die Länge des Aufzugs wenigstens zwei vorhanden sein müssen, die Stange in die Ebene zurückschieben, wodurch eine Entnahme der Stange aus der Ebene verhindert wird. Dadurch entstehen Störungen im Betriebsablauf des Aufzugs und der Versorgung der Nachschubeinrichtung mit Materialstangen, weil eine Ebene nicht vollständig von Stangen entleert wird. Aus US-A-4 016 987 ist es bekannt, die Mitnehmer für die Stangen horizontal verschiebbar auszubilden und mit einem Antrieb zu versehen.

Mit der Erfindung soll die eingangs genannte Vorrichtung mit Mitteln ausgerüstet werden, die eine sichere und vollständige Entleerung einer Ebene von insbesondere leichten Materialstangen gestatten.

Die eingangs definierte Vorrichtung ist dazu in der Weise gestaltet, daß die als Schieber ausgebildeten Mitnehmer mit einem auf eine vorgegebene Wegstrecke einstellbaren Antrieb gekoppelt sind, und daß ein auf die Höhen der einzelnen Ebenen einstellbares, den Aufzugantrieb sowie den einstellbaren Antrieb steuerndes Schrittschaltwerk vorgesehen ist. Dadurch wird erreicht, daß Stangen aus einer vorgegebenen Ebene entnommen werden können, wobei in den darüber liegenden Ebenen Stangen gegebenenfalls anderen Durchmessers bevorratet bleiben können.

Ferner können die leeren oberen Ebenen bereits mit neuen Materialstangen aufgefüllt werden, während noch von einer unteren Ebene Materialstangen zur Versorgung der Nachschubeinrichtung entnommen werden. Darüberhinaus können einzelne Ebenen automatisch vom Aufzug angesteuert werden.

Eine zweckmäßige Weiterbildung der Erfindung sieht vor, daß die Ebenen mit Abstand vor dem Aufzug angeordnet sind, sodaß eine aus einer unteren Ebene entnommene Materialstange vor den Enden der oberen Ebene der Nachschubeinrichtung durch den Aufzug zugeführt werden können.

An jedem Mitnehmer ist zweckmäßig eine Zahnleiste ausgebildet, mit der ein mit dem Antrieb gekoppeltes Zahnrad kämmt. An dem Querträger des Aufzugs sind vorteilhafterweise die Schieber sowie die Welle befestigt, auf der die mit den Zahnleisten der Mitnehmer kämmenden Zahnräder drehfest sitzen. Zur Steuerung der Vorschubbewegung der Mitnehmer bei Entnahme einer Materialstange sitzt in Weiterbildung der Erfindung auf der Welle drehfest ein Finger, in dessen Weg ein verstellbarer Anschlag ragt. Die Verstellbarkeit des Anschlags gestattet eine Anpassung der Vorschubbewegung der Schieber an den Durchmesser und damit an die Lage der jeweils vordersten, aus einer Ebene zu entnehmenden Stange. Der Anschlag ist dann zweckmäßig mit einem den Antrieb steuernden Mikroschalter versehen. Als Antrieb erweist sich ein am Querbalken befestigter Druckluftzylinder als zweckmäßig, der mit einer Wegbegrenzung für den mit der Welle gekoppelten Kolben ausgerüstet ist.

Die Erfindung wird nachstehend an dem in der beigefügten Zeichnung dargestellten Ausführungsbeispiel im einzelnen beschrieben. Es zeigen :

Figur 1 eine perspektivische Ansicht einer Vorrichtung für die Zufuhr von Materialstangen, von vorne gesehen ;

Figur 2 eine schematische Stirnansichtung der Vorrichtung aus Fig. 1 ; und

Figur 3 eine vergrößerte Darstellung eines Details aus der Vorrichtung nach Fig. 1 und 2.

Die Vorrichtung für die Zufuhr von Materialstangen besteht im wesentlichen aus zwei Baugruppen, nämlich einem Stangenmagazin 2 und einem vor einer Längsseite des Stangenmagazins 2 aufgestellten Aufzug 3. Die nicht dargestellte Nachschubeinrichtung für eine ebenfalls nicht dargestellte Werkzeugmaschine, beispielsweise einen Drehautomaten, erstreckt sich über dem Stangenmagazin 2 in dessen Längsrichtung. Die Gebrauchsmusterschrift 82 25 574 zeigt beispielsweise einen dem Aufzug 3 ähnlichen Aufzug 30 in seiner räumlichen Zuordnung zu einer Nachschubeinrichtung. Alternativ kommt auch eine andere Art des Anbaus der Vorrichtung an die Nachschubeinrichtung in Frage, wie sie etwa in der Patentschrift 23 50 105 dargestellt ist.

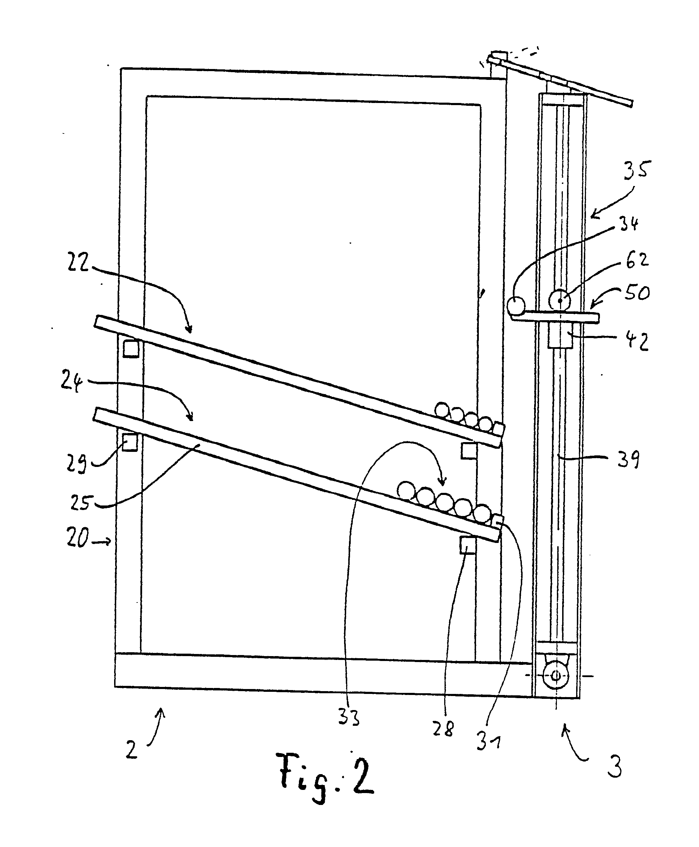

Das Stangenmagazin 2 besteht aus einem rechteckigen Rahmenwerk 20, in welchem mehrere Ebenen 22, 24 übereinander befestigt sind. Jede Ebene weist mehrere beabstandete, fluchtende Leisten 25, 26, 27 auf, die auf einem vorderen Querträger 28 und einem hinteren Querträger 29 des Rahmenwerks 20 befestigt sind. Am jeweiligen vorderen Ende jeder der Leisten 25, 26, 27 sitzt ein erhabener Winkel 31, 32. Auf diese Weise können von hinten, d. h. bei Fig. 2 von links, Materialstangen 33 auf die Leisten 25, 26, 27 aufgelegt werden, welche vermöge der Neigung der Leisten 25, 26, 27 nach vorne und unten auf den Leisten 25, 26, 27 nach vorne bis zur Anlage an die Winkel 31, 32 rollen, so daß auf den Ebenen 22, 24 jeweils eine Lage von nebeneinander liegenden Materialstangen 33, 34 zur Entnahme der jeweils vordersten, an den Winkeln 31, 32 anliegenden Materialstange bereitliegen.

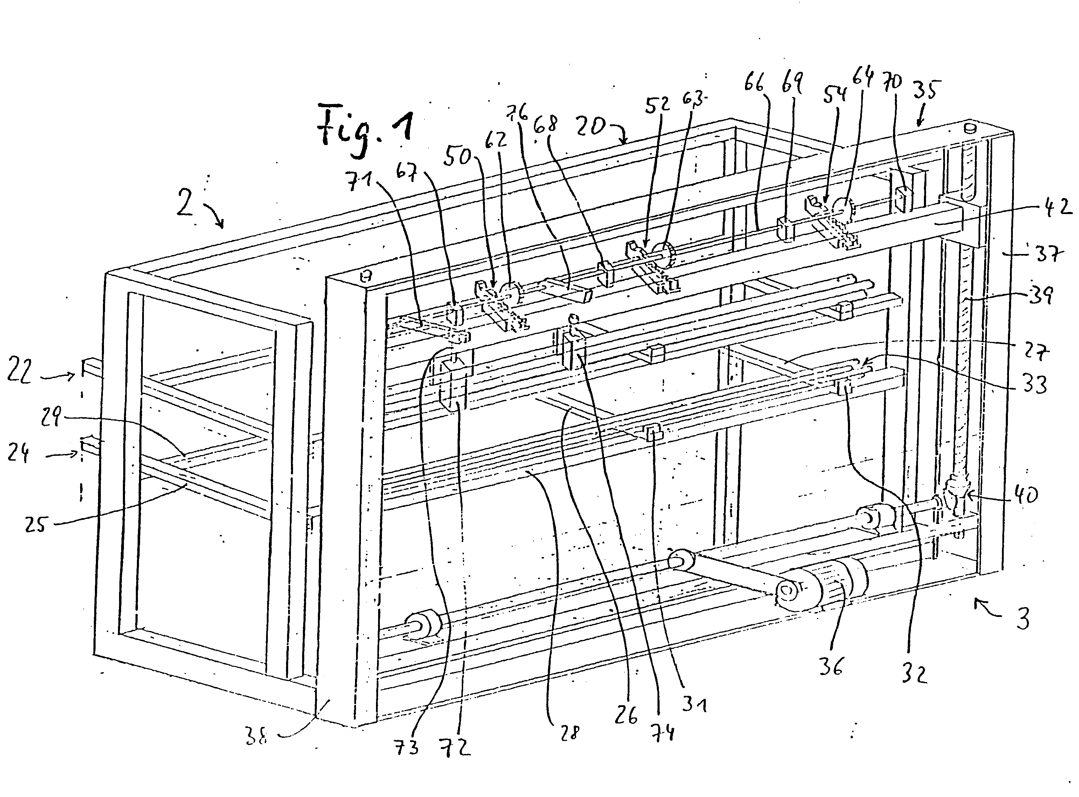

Der Aufzug 3 weist einen rechtwinkligen Rahmen 35 auf, an dessen Seitenwangen 37, 38 je eine vertikale Spindel 39 befestigt ist. Die Spindel 39 ist am unteren Ende über Kegelräder 40 mit einem Elektromotor 36 gekoppelt, der der Drehantrieb für die Spindel 39 ist. Zwischen der Spindel 39 sowie der in Fig. 1 nicht dargestellten gegenüberliegenden Spindel sitzt ein Querträger 42 derart, daß bei Drehung der Spindeln der Querträger 42 im Rahmen 35 des Aufzugs 3 aufwärts oder abwärts bewegt wird.

Auf dem Querträger 42 des Aufzugs 3 sitzen über dessen Längsrichtung beabstandet mehrere Mitnehmer 50, 52, 54, die an dem auf das Stangenmagazin 2 zuweisenden Ende je eine Kehle 58 zur Aufnahme einer Materialstange besitzen. Da der Rahmen 35 des Aufzugs 3 mit Abstand vor der benachbarten Längsseite des Stangenmagazins 2 aufgestellt ist, können beim Auf- und Niederfahren des Querbalkens 42 die Mitnehmer 50, 52, 54 vor den benachbarten Enden der Leisten 25, 26, 27 vorbeifahren.

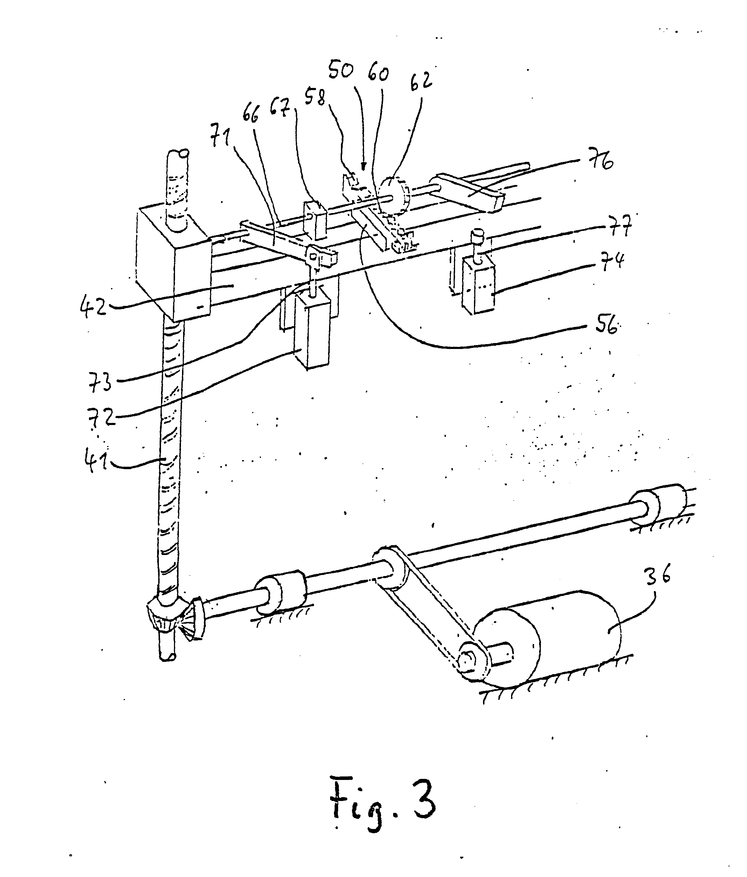

Gemäß Fig. 3 ist der Mitnehmer 50 als Schieber ausgebildet, der in einer auf dem Querträger 42 befestigten Längsführung 56 durch einen auf eine vorgegebene Wegstrecke einstellbaren Antrieb verschiebbar ist. Dazu ist die Oberseite des Mitnehmers 50 hinter der Kehle 58 mit einer Zahnleiste 60 versehen, mit der ein Zahnrad 62 in Eingriff steht. Das Zahnrad 62 sowie die den weiteren Mitnehmern 52, 54 zugeordneten weiteren Zahnräder 63, 64 sitzen drehfest auf einer Welle 66, die auf dem Querträger 42 in Pfosten 67, 68, 69, 70 drehbar gelagert ist und sich in Längsrichtung des Querträgers 42 erstreckt.

Der einstellbare Antrieb für die Zahnräder 62, 63, 64 und die Mitnehmer 50, besteht aus einem am Querbalken 42 befestigten Druckluftzylinder 72 und einem ebenfalls am Querträger befestigten Anschlag 74. Der Kolben 73 des Druckluftzylinders 72 ist an einem mit der Welle 66 drehfest verbundenen Arm 71 angelenkt, so daß die Bewegung des Kolbens 73 im Druckluftzylinder 72 zu einer entsprechenden Drehung der Welle 66 resultiert. Der Druckluftzylinder 72 ist mit einer Wegbegrenzung für den Kolben 73 ausgerüstet, so daß die Welle 66 um einen vorgegebenen Winkel vom Druckluftzylinder 72 gedreht wird.

Der Anschlag 74 wirkt mit einem auf der Welle 66 drehfest sitzenden Finger 76 zusammen und ist mit einem nicht dargestellten Mikroschalter ausgerüstet, der bei Anlaufen des Fingers 76 gegen den Anschlag 74 betätigt wird. Wie dargestellt, ist der Anschlag 74 relativ zur Welle 66 auf der gleichen Seite wie der Druckluftzylinder 72 am Querträger 42 befestigt. Nicht dargestellt sind die Druckluftzuleitungen zum Druckluftzylinder 72 sowie steuerbare Ventile, die die Beaufschlagung des Druckluftzylinders 72 mit Druckluft in der einen oder anderen Richtung ermöglichen. Ferner nicht dargestellt ist die elektrische Steuerung der Vorrichtung, in deren Eingangskreis der erwähnte Mikroschalter im Anschlag 74 liegt. In Fig. 3 ist die Spindel 41 schematisch angedeutet, die bei Fig. 1 hinter der Seitenwange 38 des Rahmens 35 drehbar befestigt ist und synchron mit der Spindel 39 vom Elektromotor 36 angetrieben werden kann.

Die beschriebene Vorrichtung arbeitet wie folgt : in die Ebene 24 werden Materialstangen 33 eines für den Drehautomaten erforderlichen Durchmessers eingelegt, und in die Ebene 22 werden Materialstangen beispielsweise anderen Durchmessers eingelegt. Wenn der Nachschubeinrichtung eine neue Materialstange eines Durchmessers zugeführt werden soll, der dem Durchmesser der in der Ebene 24 bevorrateten Materialstange 33 gleicht, wird der Elektromotor 36 in der Weise eingeschaltet, daß der Querträger 42 von dem aus dem Elektromotor 36 und den Spindeln 39, 41 bestehenden Aufzugsantrieb im Rahmen 35 abwärts gefahren wird. Der Druckluftzylinder 72 ist so beaufschlagt, daß sein Kolben 73 ganz ausgefahren ist und die Mitnehmer 50, 52, 54 demzufolge sich in ihrer ganz zurückgezogenen Position befinden. In einem nicht dargestellten Programmsteuerwerk, das elektronischer Bauart oder auch ein mechanisches Schaltwerk sein kann, ist die räumliche Lage der Ebenen 22, 24 relativ zum Querträger 42 gespeichert. Zur Entnahme der benötigten Materialstange aus der Ebene 24 wird dem Programmsteuerwerk ein entsprechender Befehl eingegeben, der bewirkt, daß der Querträger 42 mit den zurückgezogenen Mitnehmern 50, 52, 54 bis kurz unterhalb dem vorderen Ende der Ebene 24 herabfährt. An den vorderen Enden der Leisten 25, 26, 27, etwa an den Winkeln 31, 32, kann ein Mikroschalter eingebaut sein, der von der vordersten, in der Ebene 24 bevorrateten Materialstange betätigt wird und dem Programmsteuerwerk das Vorhandensein wenigstens einer Materialstange in der Ebene 24 meldet. Alternativ kann auf dem Querträger 42 ein Fühler angeordnet sein, der das Vorhandensein der vordersten Materialstange in jeder der Ebenen 22, 24 ertastet und ein entsprechendes Signal dem Programmsteuerwerk liefert.

Wenn das Vorhandensein einer benötigten Materialstange in der Ebene 24 dem Programmsteuerwerk gemeldet worden ist, bewirkt dieses, daß der Druckluftzylinder 72 in der Weise mit Druckluft beaufschlagt wird, daß sein Kolben 73 in den Zylinder 72 einfährt und über die Welle 66 und die Zahnräder 62, 63, 64 Mitnehmer 50, 52, 54 synchron in Richtung auf die vorderste Materialstange der Ebene 24 vorschiebt. Die Wegstrecke, um die die Mitnehmer 50, 52, 54 vorgeschoben werden, wird durch die Lage des Anschlags 74 bestimmt, der, wie in Fig. 3 angedeutet, ein Druckluftzylinder mit einstellbarem Kolben 77 sein kann. Sobald der Finger 76 auf dem Kolben 77 des Anschlags 74 auftrifft, wird der erwähnte Mikroschalter des Anschlags 74 betätigt, der den weiteren Antrieb der Welle 66 durch den Druckluftzylinder 72 stillsetzt. Die Kehlen 58 der Mitnehmer befinden sich jetzt genau unterhalb der vordersten Materialstange der Ebene 24. Das Programmsteuerwerk fährt nach Betätigung des Mikroschalters im Anschlag 74 den Querbalken 42 so weit hoch, daß die vorderste Materialstange der Ebene 24 von dem Mitnehmer 50, 52, 54 unterfaßt und aus der Ebene 24 herausgehoben wird. Das Programmsteuerwerk veranlaßt sodann, daß der Kolben 73 aus dem Druckluftzylinder 72 wieder ausgefahren wird, bis die Mitnehmer 50, 52, 54 sich wieder in ihrer zurückgezogenen Stellung befinden, wobei jetzt die benötigte Materialstange auf den Mitnehmern 50, 52, 54, und zwar in deren Kehlen 58, ruht. Die mitgenommene Materialstange fährt am vorderen Ende der über der Ebene 24 befindlichen Ebene 22 vorbei nach oben bis zu einer oberen Endstellung, wo sie etwa in der in der erwähnten Patentschrift dargestellten Weise dem Einlauf der Nachschubeinrichtung übergeben wird.

Es versteht sich, daß die Mitnehmer 50, 52, 54 derart in Längsrichtung des Querträgers 42 beabstandet sind, daß sie in den Zwischenraum zwischen den Leisten 25, 26, 27 eingreifen können.

## Patentansprüche

1. Vorrichtung für die Zufuhr von Materialstangen (33) in eine Nachschubeinrichtung für Werkzeugmaschinen, insbesondere Drehautomaten, mit einem mehrere, übereinander schräg angeordnete Ebenen (22, 24) aufweisenden Stangenmagazin (2) sowie mit einem vor den Ebenen angeordneten Aufzug (3), welcher Mitnehmer (50, 52, 54) zum Erfassen jeweils einer Stange (33) aus dem Magazin (2) sowie am oberen Ende eine Stangenabwurfeinrichtung aufweist, die eine Stange aus den Mitnehmern der Nachschubeinrichtung zuführt, dadurch gekennzeichnet, daß die als Schieber ausgebildeten Mitnehmer (50, 52, 54) mit einem auf eine vorgegebene Wegstrecke einstellbaren Antrieb (72, 74) gekoppelt sind, und daß ein auf die Höhen der einzelnen Ebenen (22, 24) einstellbares, den Aufzugsantrieb (36, 39, 41) sowie den einstellbaren Antrieb (72, 74) steuerndes Schrittschaltwerk vorgesehen ist.

2. Vorrichtung nach Anspruch 1, dadurch gekennzeichnet, daß das Schrittschaltwerk ein elektronisches Programmsteuerwerk ist.

3. Vorrichtung nach Anspruch 1 oder 2, dadurch gekennzeichnet, daß die Ebenen (22, 24) mit Abstand vor dem Aufzug angeordnet sind.

4. Vorrichtung nach einem der vorstehenden Ansprüche, dadurch gekennzeichnet, daß an jedem Mitnehmer (50, 52, 54) eine Zahnleiste (60) ausgebildet ist, mit der ein mit dem Antrieb gekoppeltes Zahnrad (62) kämmt.

5. Vorrichtung nach einem der vorstehenden Ansprüche, dadurch gekennzeichnet, daß an dem Querträger (42) des Aufzugs (3) die Schieber sowie eine Welle (66) befestigt sind, auf der die Zahnräder (62, 63, 64) drehfest sitzen.

6. Vorrichtung nach Anspruch 5, dadurch gekennzeichnet, daß auf der Welle (66) ein Finger (76) drehfest sitzt, in dessen Weg ein verstellbarer Anschlag (74, 77) ragt.

7. Vorrichtung nach Anspruch 6, dadurch gekennzeichnet, daß der Anschlag (74, 77) mit einem den Antrieb (72) steuernden Mikroschalter versehen ist.

8. Vorrichtung nach einem der vorstehenden Ansprüche, dadurch gekennzeichnet, daß der Antrieb ein am Querträger befestigter Druckluftzylinder (72, 73) ist, der mit einer Wegbegrenzung für den mit der Welle (66) gekoppelten Kolben (73) ausgerüstet ist.

## Claims

1. A mechanism for the feeding of rods (33) of material into a feed mechanism for machine tools, in particular automatic lathes, having a number of planes (22, 24) arranged sloping one above the other and exhibiting a rod magazine (2) as well as having a lift (3) which is arranged in front of the planes and which exhibits driving dogs (50, 52, 54) for seizing one rod (33) at a time out of the magazine (2) as well as at the top end a rod discharge mechanism which feeds one rod from the driving dogs to the feed mechanism, characterized in that the driving dogs (50, 52, 54) are made as sliders and are coupled to a drive (72, 74) which may be set to a predetermined length of travel, and that a stepping mechanism is provided, which may be set to the heights of the individual planes (22, 24) and controls the lift drive (36, 39, 41) as well as the adjustable drive (72, 74).

2. A mechanism as in Claim 1, characterized in that the stepping mechanism is an electronic programming control system.

3. A mechanism as in Claim 1 or 2, characterized in that the planes (22, 24) are arranged at a distance in front of the lift.

4. A mechanism as in one of the preceding Claims, characterized in that on each driving dog (50, 52, 54) a rack (60) is formed, with which meshes a gearwheel (62) coupled to the drive.

5. A mechanism as in one of the preceding Claims, characterized in that to the cross-bearer (42) of the lift (3) are fastened the sliders as well as a shaft (66) upon which the gearwheels (62, 63, 64) are seated so as to turn with it.

6. A mechanism as in Claim 5, characterized in that on the shaft (66) a finger (76) is seated so as to turn with it, into the path of which projects an adjustable stop (74, 77).

7. A mechanism as in Claim 6, characterized in that the stop (74, 77) is provided with a microswitch controlling the drive (72).

8. A mechanism as in one of the preceding Claims, characterized in that the drive is a compressed-air cylinder (72, 73) which is fastened to the cross-bearer and which is equipped with a travel-limiter for the piston (73) coupled to the shaft (66).

**Revendications**

1. Dispositif permettant d'amener des barres de matériau (33) à un système d'approvisionnement pour machines-outils, en particulier pour tours automatiques, comprenant un magasin de barres (2) à plusieurs plans inclinés superposés (22, 24) ainsi qu'un élévateur (3) placé devant les plans et équipé de preneurs (50, 52, 54) pour saisir les barres (33) provenant du magasin (2) et, à l'extrémité supérieure, d'un système de déchargement de barres qui amène les barres des preneurs au système d'approvisionnement, caractérisé en ce que les preneurs (50, 52, 54) conçus sous la forme de coulisses sont reliés à un dispositif d'entraînement (72, 74) réglable sur une distance prédéterminée, et ce qu'il est prévu un mécanisme pas à pas qui est réglable en fonction de la hauteur des différents plans (22, 24) et qui commande le dispositif d'entraînement d'élévateur (36, 39, 41) ainsi que le dispositif d'entraînement réglable (72, 74).

2. Dispositif selon la revendication 1, caractérisé en ce que le mécanisme pas à pas est un mécanisme de commande programmable.

3. Dispositif selon la revendication 1 ou 2, caractérisé en ce qu'un espace est prévu entre les plans (22, 24) et l'élévateur.

4. Dispositif selon l'une des revendications précédentes, caractérisé en ce que, sur chaque preneur (50, 52, 54), est prévue une section dentée (60) qui s'engrène dans une roue dentée (62) reliée au dispositif d'entraînement.

5. Dispositif selon l'une des revendications précédentes, caractérisé en ce que, sur la traverse (42) de l'élévateur (3), sont fixés les coulisses ainsi qu'un arbre (6) auquel les roues dentées (62, 63, 64) sont liées en rotation.

6. Dispositif selon la revendication 5, caractérisé en ce qu'il est prévu un doigt (76), lié en rotation à l'arbre (66), sur la trajectoire duquel est placée une butée réglable (74, 77).

7. Dispositif selon la revendication 6, caractérisé en ce que la butée (74, 77) est équipée d'un microrupteur commandant le dispositif d'entraînement (72).

8. Dispositif selon l'une des revendications précédentes, caractérisé en ce que le dispositif d'entraînement est un vérin pneumatique (72, 73) qui est fixé sur la traverse, et qui est équipé d'un limiteur de course du piston (73) relié à l'arbre (66).

Fig. 1

Fig. 2

Fig. 3